(19)

Europäisches
Patentamt

European
Patent Office

Office européen
des brevets

(11)  EP 3 875 242 A1

(12)  EUROPEAN PATENT APPLICATION

(43) Date of publication:
08.09.2021  Bulletin 2021/36

(51) Int Cl.:
B29C 44/28 (2006.01)          B29C 44/60 (2006.01)

(21) Application number: 20161314.8

(22) Date of filing: 05.03.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Covestro Deutschland AG
51373 Leverkusen (DE)

(72) Inventor: The designation of the inventor has not
yet been filed

(74) Representative: Levpat
c/o Covestro AG
Gebäude 4825
51365 Leverkusen (DE)

(54)  **METHOD AND APPARATUS FOR ONLINE DETERMINING FOAM DENSITY DURING FOAM PRODUCTION PROCESS**

(57)  The present invention relates to a process and an apparatus for producing foam by a continuous slab stock foam foaming method, and in particular relates to a method and an apparatus for online determining a foam density during a foam production process. In a method for online determining a foam density during a foam production process according to one aspect of the present invention, raw material for foam production is injected onto a transporting slab of a conveyor via a mixing head disposed at one end of the conveyor, the method comprising: obtaining a top profile of foam in a predetermined cross section which is at a location along an advancing direction of the transporting slab; determining an area of the cross section on the basis of the top profile; and determining the foam density on the basis of the area of the cross section, a moving speed of the transporting slab and a flow rate of the raw material at the mixing head. As the area of the cross section, the moving speed of the slab and the flow rate of the raw material can be obtained in a real-time, accurate and convenient manner, the method and apparatus according to the present invention have advantages such as high measurement accuracy, strong real-time performance, continuous data collection and convenient implementation.

EP 3 875 242 A1

# Description

## FIELD OF THE INVENTION

The present invention relates to a process and an apparatus for producing foam by a continuous slab stock foam foaming method, and in particular relates to a method and an apparatus for online determining a foam density during a foam production process.

## BACKGROUND ART

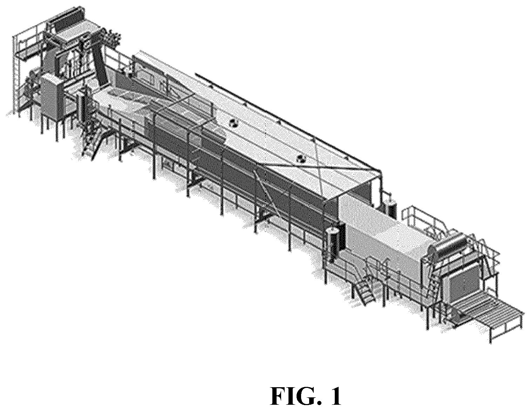

The continuous slab stock foam foaming method is a common process for producing polyurethane foam. In this process, polyols, isocyanates, water and auxiliary blowing agents, catalysts, stabilizers and other additives as raw materials are pumped into a mixing head with precise metering. FIG. 1 is a view of a typical apparatus for continuous slabstock foam production. Referring to FIG. 1, the raw materials are spread onto a slab 110 after being mechanically stirred or other mixing method. Then the slab transports the mixture within an ventilation channel 120. During the transportation, the mixture undergoes chemical reaction to form a slabstock 130 having a certain dimension (for example, having a maximum width of 220cm, a height of 120cm, and an unlimited length). The resulting slabstock (polyurethane foam) is cut to the desired size and shape.

In the continuous slabstock foam production process, foam density is the most important specification for quality control, as it is directly associated with physical properties of foam and also determines the material cost of subsequent products. In intelligent manufacturing, monitoring quality performance - specifications is the foundation of data analysis and quality optimization. However, there is still lack of a method for online determining a foam density in an accurate and efficient method in the industry. The common practice is cutting a sample from the manufactured slabstock foam and then performing a corresponding test - in the laboratory.

## SUMMARY OF THE INVENTION

An objective of the present invention is to provide a method and an apparatus for online determining a foam density during a foam production process, which have such advantages as convenience and efficiency.

In a method for online determining a foam density during a foam production process according to one aspect of the present invention, raw material for foam production is injected onto a transporting slab of a conveyor via a mixing head disposed at one end of the conveyor, the method comprising:

> obtaining a top profile of foam in a predetermined cross section which is at a location along an advancing direction of the transporting slab;
> determining an area of the cross section on the basis of the top profile; and
determining the foam density on the basis of the area of the cross section, a moving speed of the transporting slab and a flow rate of the raw material at the mixing head.

Optionally, in the above method, the top profile is obtained by using one or more laser sensors or ultrasonic sensors disposed above the foam at the cross section.

Optionally, in the above method, the cross section is perpendicular to the advancing direction.

Optionally, in the above method, the cross section is separate from the mixing head with a predetermined distance, when a distance between the cross section and the mixing head is larger than the predetermined distance, a height of the foam tends to be stable.

Optionally, in the above method, the area of the cross section is determined by:

> determining heights of respective points of the top profile relative to the transporting slab; and
> integrating the heights of the respective points along a width direction of the transporting slab so as to determine the area of the cross section.

Optionally, in the above method, the foam density at the cross section is determined as follows:

$$D_f = \frac{Flow(t - L/V) \times (1 - k)}{S' \times V}$$

$$S' = S \times sin\theta$$

where $D_f$ denotes the foam density at the cross section, t denotes the current time, L denotes the distance between the cross section and the mixing head, V denotes the moving speed of the transporting slab, $Flow(t-L/V)$ denotes a flow rate of the raw material at the mixing head at $(t-L/V)$, k denotes a factor of material loss of the raw material, S denotes the area of the cross section, S' denotes a projected area of the cross section in a plane perpendicular to the advancing direction, and $\theta$ denotes an angle between an extending direction of the cross section and the advancing direction.

In an apparatus for online determining a foam density during a foam production process according to another aspect of the present invention, raw material for foam production is injected onto a transporting slab of a conveyor via a mixing head disposed at one end of the conveyor, the apparatus comprising:

> a top profile measuring unit configured to obtain a top profile of foam in a predetermined cross section which is at a location along an advancing direction of the transporting slab;

a calculating unit configured to:

determine an area of the cross section on the basis of the top profile; and

determine the foam density on the basis of the area of the cross section, a moving speed of the transporting slab and a flow rate of the raw material at the mixing head.

In accordance with the embodiments of the present invention, the foam density is determined by utilizing process parameters in the foam production process. As the area of the cross section, the moving speed of the slab and the flow rate of the raw material at the mixing head can be measured or obtained in a real-time, accurate and convenient manner, the method and apparatus for determining the foam density according to the present invention have advantages such as high measurement accuracy, strong real-time performance and convenient implementation.

## BRIEF DESCRIPTION OF THE DRAWINGS

FIG. 1 is a view of a typical apparatus for continuous slabstock foam production.

FIG. 2 is a side view of a typical apparatus for continuous slabstock foam production.

FIG. 3 is a schematic diagram of a cross section profile obtained by scanning the top of foam using one or more laser sensors or ultrasonic sensors according to one embodiment of the present invention.

FIG. 4 is a schematic diagram of a top profile of a cross section obtained by scanning using one or more laser sensors or ultrasonic sensors.

FIG. 5 is a schematic block diagram of an apparatus for online determining a foam density during a foam production process according to one embodiment of the present invention.

FIG. 6 is a flowchart of a method for online determining a foam density during a foam production process according to another embodiment of the present invention.

## DETAILED DESCRIPTION OF THE INVENTION

The present invention will be described more fully with reference to the drawings in which exemplary embodiments of the present invention are illustrated. However, the present invention may be implemented in different forms, and should not be construed as being only limited to the embodiments given herein. These embodiments are intended to fully disclose the present invention, and enable a person skilled in the art to understand the protection scope of the present invention in a more comprehensive manner.

In this description, the terms such as "comprising" and "including" mean that, in addition to having units and steps that are directly and explicitly disclosed in the description and claims, the technical solution of the present invention does not exclude having units and steps that are not directly or explicitly disclosed.

The terms such as "first" and "second" do not indicate the order of the units in terms of time, space, size, etc., but are only used to distinguish the units.

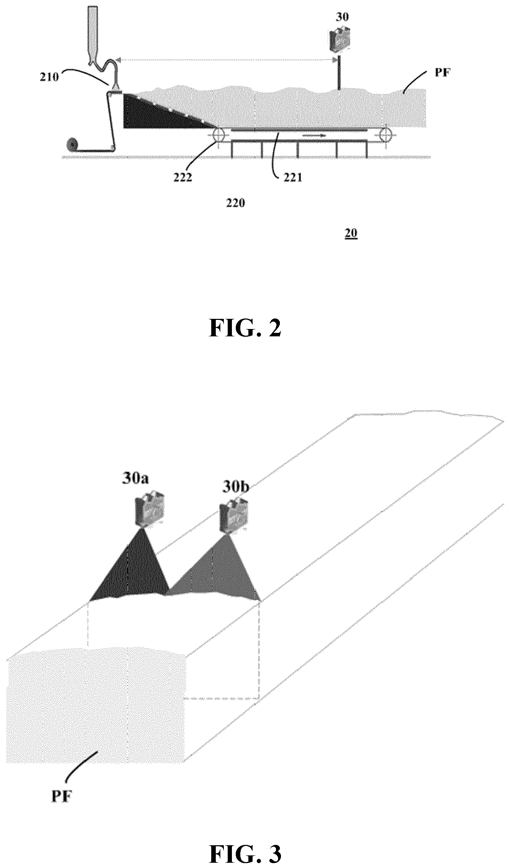

FIG. 2 is a side view of a typical apparatus for continuous slabstock foam production. As illustrated in FIG. 2, the apparatus for continuous slabstock foam production 20 includes a mixing head 210, an ventilation channel (not shown), and a conveyor 220, wherein the mixing head 210 is disposed at one end of the conveyor 220. The conveyor 220 includes a transporting slab 221 and a power unit 222 for driving the transporting slab 221 along an advancing direction indicated by the arrow in the figure. Further referring to FIG. 2, the mixing head 210 injects a mixture of raw materials such as polyols, isocyanates, water and auxiliary blowing agents, catalysts, stabilizers, and other additives onto the transporting slab 221 of the conveyor. The mixture of raw materials takes chemical reaction during conveyance by the transporting slab 221 through the ventilation channel, thereby forming a slabstock PF (for example, flexible polyurethane foam) having a certain dimension.

According to one aspect of the present invention, the foam density is determined by utilizing process parameters in the foam production process. Specifically, in order to determine the foam density at a predetermined location of the conveyor line or ventilation channel, the area of the cross section of the foam at the above location can be determined at first, and then the foam density is calculated on the basis of the area of the cross section, a foam conveying speed (a moving speed of the transporting slab) and a flow rate of the raw material for foam production at the mixing head. Optionally, the cross section is perpendicular to the foam conveying direction.

In order to determine the area of the cross section, according to one embodiment of the present invention, as illustrated in FIG. 2, a laser sensor or an ultrasonic sensor 30 is disposed above the foam at the cross section to determine the top profile of the cross section by scanning the foam, and then the area of the cross section is determined on the basis of the top profile. As illustrated in FIG. 2, the cross section is separate from the mixing head with a predetermined distance L. Optionally, when the predetermined distance is arranged so that a distance between the cross section and the mixing head is larger than the predetermined distance, a height of the foam tends to be stable.

FIG. 3 is a schematic diagram of a cross section profile obtained by scanning the top of foam using one or more laser sensors or ultrasonic sensors according to one embodiment of the present invention. In the embodiment illustrated by FIG. 3, a dual-sensor configuration is adopted, in which two laser sensors or ultrasonic sensors 30a and 30b are arranged side by side in a direction perpendicular to the advancing direction of the transporting slab so as to obtain the top profile of the cross section. The scanning areas of dual sensors may overlap, but the overlapping area can be merged by image processing technology to obtain a complete top profile of the cross section.

It shall be noted that the above number of sensors and the arrangement thereof are only exemplary. In practical applications, a greater number of sensors can be used as required, and they are not necessarily arranged along the same straight line.

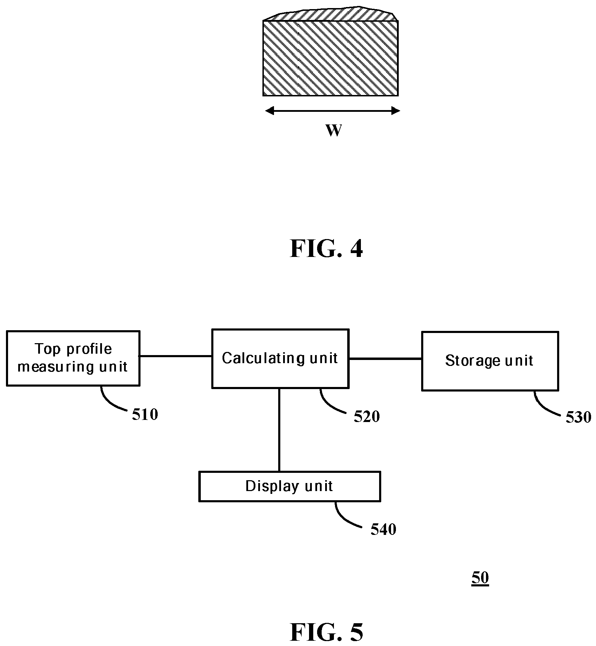

FIG. 4 is a schematic diagram of a top profile of a cross section obtained by scanning using one or more laser sensors or ultrasonic sensors, wherein w denotes the width of the transporting slab or foam. In the production process, the top profile of the foam is not necessarily a flat surface, but an undulating surface as illustrated in FIG. 4. In this regard, the area of the cross section can be determined by: firstly determining heights of respective points of the top profile relative to the transporting slab; and then integrating the heights of the respective points along a width direction of the transporting slab so as to calculate the area of the cross section.

Optionally, the foam density at the cross section can be determined as follows:

$$D_f = \frac{Flow(t-L/V)\times(1-k)}{S\times V} \quad (1)$$

where $D_f$ denotes the foam density at the cross section, t denotes the current time, L denotes the distance between the cross section and the mixing head, V denotes the moving speed of the transporting slab, Flow(t-L/V) denotes a flow rate of the raw material at the mixing head at (t-L/V), k denotes a factor of material loss of the raw material, and S denotes the area of the cross section.

It shall be noted that when there is an angle between the cross section and the advancing direction, the foam density can be determined as follows:

$$D_f = \frac{Flow(t-L/V)\times(1-k)}{S'\times V} \quad (2)$$

$$S' = S \times sin\theta \quad (3)$$

where S' denotes a projected area of the cross section in a plane perpendicular to the advancing direction, and θ denotes an angle between an extending direction of the cross section and the advancing direction.

FIG. 5 is a schematic block diagram of an apparatus for online determining a foam density during a foam production process according to one embodiment of the present invention.

As illustrated in FIG. 5, the apparatus 50 includes a top profile measuring unit 510 and a calculating unit 520 coupled to the top profile measuring unit 510. Optionally, the apparatus 50 further includes a storage unit 530 configured to store the foam density value determined online and a display apparatus 540 configured to display the foam density value.

The top profile measuring unit 510 is configured to obtain a top profile of foam at the predetermined cross section. It may be, for example, a laser sensor or an ultrasonic sensor disposed above the foam at the cross section as described above. The calculating unit 520 is configured to determine an area of the cross section on the basis of the top profile, and to determine the foam density on the basis of the area of the cross section, a moving speed of the transporting slab and a flow rate of the raw material at the mixing head. The methods for determining the area of the cross section and foam density have been described above, and will not be repeated here.

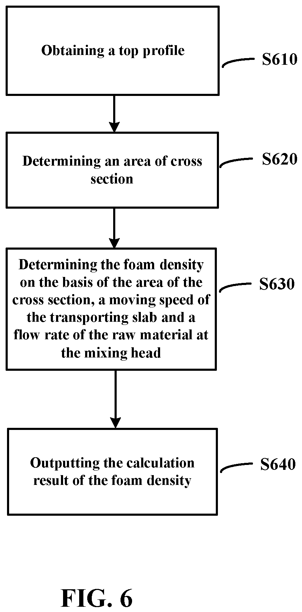

FIG. 6 is a flowchart of a method for online determining a foam density during a foam production process according to another embodiment of the present invention. Exemplarily, the method of this embodiment is implemented by using the apparatus illustrated in FIG. 5. However, it shall be noted that the implementation of the method of this embodiment is not limited to an apparatus having a specific structure.

As illustrated in FIG. 6, in step S610, the top profile measuring unit 510 obtains a top profile of foam in a predetermined cross section which is at a location along an advancing direction of the transporting slab.

Then in step S620, the calculating unit 520 determines an area of the cross section on the basis of the top profile. The way for determining the area of the cross section has been described above, and will not be repeated here.

Next in step S630, the calculating unit 520 determines the foam density on the basis of the area of the cross section, a moving speed of the transporting slab and a flow rate of the raw material at the mixing head. The way for determining the foam density has been described above, and will not be repeated here.

Subsequently, in step S640, the calculating unit 520 outputs the calculation result of the foam density obtained in step S630 to the storage unit 530 and the display unit 540.

The principles and preferred embodiments of the present invention are described above. However, the present invention should not be construed as being limited to the specific embodiments discussed herein. The above-mentioned preferred embodiments should be considered as illustrative rather than restrictive, and it should be understood that a person skilled in the art may, without departing from the scope of the present invention as defined in the following claims, modify these embodiments.

**Claims**

1. A method for online determining a foam density during a foam production process, wherein raw material is injected onto a transporting slab of a conveyor via a mixing head disposed at one end of the conveyor, the method comprising:

   obtaining a top profile of foam in a predetermined cross section which is at a location along an advancing direction of the transporting slab; determining an area of the cross section on the basis of the top profile; and determining the foam density at the cross section on the basis of the area of the cross section, a moving speed of the transporting slab and a flow rate of the raw material at the mixing head.

2. The method of claim 1, wherein the top profile is obtained by using one or more laser sensors or ultrasonic sensors disposed above the foam at the cross section.

3. The method of claim 1, wherein the cross section is perpendicular to the advancing direction.

4. The method of claim 1, wherein the cross section is separate from the mixing head with a predetermined distance, when a distance between the cross section and the mixing head is larger than the predetermined distance, a height of the foam tends to be stable.

5. The method of claim 1, wherein the area of the cross section is determined by:

   determining heights of respective points of the top profile relative to the transporting slab; and integrating the heights of the respective points along a width direction of the transporting slab so as to determine the area of the cross section.

6. The method of claim 1, wherein the foam density at the cross section is determined as follows:

$$D_f = \frac{Flow(t - L/V) \times (1 - k)}{S' \times V}$$

$$S' = S \times sin\theta$$

where $D_f$ denotes the foam density at the cross section, t denotes the current time, L denotes the distance between the cross section and the mixing head, V denotes the moving speed of the transporting slab, Flow(t-L/V) denotes a flow rate of the raw material at the mixing head at (t-L/V), k denotes a factor of material loss of the raw material, S denotes the area of the cross section, S' denotes a projected area of the cross section in a plane perpendicular to the advancing direction, and $\theta$ denotes an angle between an extending direction of the cross section and the advancing direction.

7. An apparatus for online determing a foam density during a foam production process, wherein raw material is injected onto a transporting slab of a conveyor via a mixing head disposed at one end of the conveyor, the apparatus comprising:

   a top profile measuring unit configured to obtain a top profile of foam in a predetermined cross section which is at a location along an advancing direction of the transporting slab; a calculating unit configured to:

      determine an area of the cross section on the basis of the top profile; and determine the foam density on the basis of the area of the cross section, a moving speed of the transporting slab and a flow rate of the raw material at the mixing head.

8. The apparatus of claim 7, wherein the top profile measuring unit comprises one or more laser sensors or ultrasonic sensors disposed above the foam at the cross section.

9. The apparatus of claim 7, wherein the cross section is perpendicular to the advancing direction.

10. The apparatus of claim 7, wherein the cross section is separate from the mixing head with a predetermined distance, when a distance between the cross section and the mixing head is larger than the predetermined distance, a height of the foam tends to be stable.

11. The apparatus of claim 7, wherein the calculating unit is configured to determine the area of the cross section by:

    determining heights of respective points of the top profile relative to the transporting slab; and integrating the heights of the respective points along a width direction of the transporting slab so as to determine the area of the cross section.

12. The apparatus of claim 7, wherein the calculating unit is configured to determine the foam density at the cross section as follows:

$$D_f = \frac{Flow(t - L/V) \times (1 - k)}{S' \times V}$$

$$S' = S \times sin\theta$$

where $D_f$ denotes the foam density at the cross section, t denotes the current time, L denotes the distance between the cross section and the mixing head, V denotes the moving speed of the transporting slab, Flow(t-L/V) denotes a flow rate of the raw material at the mixing head at (t-L/V), k denotes a factor of material loss of the raw material, S denotes the area of the cross section, S' denotes a projected area of the cross section in a plane perpendicular to the advancing direction, and $\theta$ denotes an angle between an extending direction of the cross section and the advancing direction.

FIG. 1

**FIG. 2**

**FIG. 3**

**FIG. 4**

| Top profile measuring unit | Calculating unit | Storage unit |

510    520    530

Display unit

540

50

**FIG. 5**

Obtaining a top profile — S610

Determining an area of cross section — S620

Determining the foam density on the basis of the area of the cross section, a moving speed of the transporting slab and a flow rate of the raw material at the mixing head — S630

Outputting the calculation result of the foam density — S640

# FIG. 6

**EUROPEAN SEARCH REPORT**

Europäisches Patentamt
European Patent Office
Office européen des brevets

Application Number

EP 20 16 1314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/065973 A1 (EHBING HUBERT [DE] ET AL) 8 April 2004 (2004-04-08) * paragraphs [0045] - [0048], [0064] - [0077]; claim 1; figure 1 * * paragraphs [0004], [0025] * | 1,2,6-8, 12 | INV. B29C44/28 B29C44/60 |
| X | US 2006/167121 A1 (EHBING HUBERT [DE] ET AL) 27 July 2006 (2006-07-27) * paragraph [0045] - paragraph [0047]; figures 1, 2 * | 1,2,5-8, 11 | |
| X | US 4 613 471 A (HARRIS HOLTON E [US]) 23 September 1986 (1986-09-23) * column 1, line 38 - column 2, line 40 * * column 2, line 65; claim 2; figures 1, 3 * * line 22 - column 12, line 47 * * column 4, line 40 - line 51; claim 2 * | 1-4, 6-10,12 | |
| Y | US 2006/202371 A1 (EHBING HUBERT [DE] ET AL) 14 September 2006 (2006-09-14) * paragraphs [0022], [0038]; claim 20 * | 1-5,7-11 | TECHNICAL FIELDS SEARCHED (IPC) B29C |
| Y | WO 2013/095876 A1 (ROHM & HAAS [US]; STEWART SETH THOMAS [US]; VAN RHEENEN PAUL R [US]) 27 June 2013 (2013-06-27) * page 5, line 27 - line 30 * | 1-5,7-11 | |

The present search report has been drawn up for all claims

| Place of search | Date of completion of the search | Examiner |
|---|---|---|
| The Hague | 1 September 2020 | Tortosa Masiá, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 1314

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2020

| Patent document cited in search report | | Publication date | Patent family member(s) | | Publication date |
|---|---|---|---|---|---|
| US 2004065973 | A1 | 08-04-2004 | CN | 1486830 A | 07-04-2004 |
| | | | DE | 10237005 A1 | 26-02-2004 |
| | | | EP | 1393877 A2 | 03-03-2004 |
| | | | JP | 2004130786 A | 30-04-2004 |
| | | | KR | 20040015685 A | 19-02-2004 |
| | | | US | 2004065973 A1 | 08-04-2004 |
| US 2006167121 | A1 | 27-07-2006 | CN | 1820926 A | 23-08-2006 |
| | | | DE | 102005003341 A1 | 27-07-2006 |
| | | | EP | 1683618 A2 | 26-07-2006 |
| | | | JP | 2006205731 A | 10-08-2006 |
| | | | KR | 20060086292 A | 31-07-2006 |
| | | | US | 2006167121 A1 | 27-07-2006 |
| US 4613471 | A | 23-09-1986 | NONE | | |
| US 2006202371 | A1 | 14-09-2006 | BR | PI0600764 A | 24-10-2006 |
| | | | CA | 2538459 A1 | 10-09-2006 |
| | | | CN | 1830650 A | 13-09-2006 |
| | | | DE | 102005010999 A1 | 14-09-2006 |
| | | | EP | 1700682 A2 | 13-09-2006 |
| | | | JP | 2006248230 A | 21-09-2006 |
| | | | KR | 20060097650 A | 14-09-2006 |
| | | | US | 2006202371 A1 | 14-09-2006 |
| WO 2013095876 | A1 | 27-06-2013 | CN | 103175832 A | 26-06-2013 |
| | | | JP | 6016614 B2 | 26-10-2016 |
| | | | JP | 2013136751 A | 11-07-2013 |
| | | | KR | 20130079201 A | 10-07-2013 |
| | | | TW | 201333468 A | 16-08-2013 |
| | | | WO | 2013095876 A1 | 27-06-2013 |

EPO FORM P0459

For more details about this annex : see Official Journal of the European Patent Office, No. 12/82